Europäisches Patentamt

European Patent Office

Office européen des brevets

(19)

(11) **EP 0 674 248 B1**

(12) **FASCICULE DE BREVET EUROPEEN**

(45) Date de publication et mention
de la délivrance du brevet:
**16.09.1998 Bulletin 1998/38**

(51) Int Cl.6: **G05B 19/42, B24B 9/14**

(21) Numéro de dépôt: **95400549.2**

(22) Date de dépôt: **14.03.1995**

(54) **Procédé pour la détermination de l'erreur de restitution d'une machine à déborder à laquelle est associé un appareil de lecture de contour, et application à l'autocalibrage de l'ensemble**

Verfahren zur Bestimmung des Wiederherstellungsfehlers einer Kantenschneidmaschine mit zugehöriger Konturlesevorrichtung und Anwendung der Selbstkalibrierung an der zugehörigen Vorrichtung

Method for determining the restitution error of an edging machine with associated contour reading device and application to the autocalibration of the assembly

(84) Etats contractants désignés:
**BE DE ES GB IT**

(30) Priorité: **15.03.1994 FR 9402971**

(43) Date de publication de la demande:
**27.09.1995 Bulletin 1995/39**

(73) Titulaire: **ESSILOR INTERNATIONAL (Compagnie Générale d'Optique)**
**F-94220 Charenton-le-Pont (FR)**

(72) Inventeur: **Clara, Philippe**
**F-94170 Le Perreux (FR)**

(74) Mandataire: **CABINET BONNET-THIRION**
**12, Avenue de la Grande-Armée**
**75017 Paris (FR)**

(56) Documents cités:
EP-A- 0 092 364    EP-A- 0 492 740
DE-A- 4 012 660    US-A- 4 912 880

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne d'une manière générale l'opération de débordage que constitue l'usinage d'un verre de lunettes au contour du cercle ou entourage de monture de lunettes dans lequel il doit être monté, indépendamment de l'opération de finition qui fait usuellement suite à cette opération de débordage et au cours de laquelle est assuré, ou non, sur la tranche de ce verre de lunettes, suivant son mode de maintien sur ce cercle ou entourage de monture de lunettes, un biseau ou une rainure.

Cette opération de débordage est usuellement conduite sur une machine à déborder, dont le ou les outils de coupe sont par exemple des meules ou des fraises, et qui est communément appelée meuleuse ou meuleuse biseauteuse.

La présente invention vise plus particulièrement le cas où, à une telle machine à déborder est associé un appareil de lecture de contour, et, plus particulièrement encore, le cas où l'ensemble que constituent cette machine à déborder et cet appareil de lecture de contour est sous le contrôle d'une unité de pilotage numérique.

Les dispositions correspondantes étant bien connues par elles-mêmes, et ne relevant pas en propre de la présente invention, elles ne seront pas décrites ici.

Il suffira d'indiquer que l'appareil de lecture de contour ainsi mis en oeuvre permet de procéder, en dimension et en axe, c'est-à-dire en orientation, à un relevé de forme portant, soit, directement, sur le cercle ou entourage de monture de lunettes à équiper, soit, indirectement, sur un gabarit image de ce cercle ou entourage de monture de lunettes.

Dans l'un et l'autre cas, l'unité de pilotage numérique applique ensuite à la machine à déborder les données provenant d'un tel relevé, pour la restitution de celles-ci par cette machine à déborder.

Il importe, bien entendu, que, après usinage, il y ait une adéquation aussi parfaite que possible entre le contour du verre de lunettes et celui du cercle ou entourage de monture de lunettes dans lequel il doit être monté.

Or, dans les résultats de cet usinage, interviennent successivement deux types d'erreur.

Il y a tout d'abord l'erreur de lecture due à l'appareil de lecture de contour.

Il y a, ensuite, l'erreur de restitution due à la machine à déborder.

L'erreur de lecture de l'appareil de lecture de contour vient pour l'essentiel de construction, et elle est en pratique relativement stable dans le temps.

L'erreur de restitution de la machine à déborder vient au contraire pour l'essentiel de l'usure dont est inévitablement l'objet son outil de coupe en service, et elle augmente donc avec le temps.

Mais, dans l'un et l'autre cas, il s'agit d'erreurs systématiques, qui interviennent toujours dans le même sens, et non pas de manière aléatoire, et il est donc possible d'en tenir compte au cours d'opérations de calibrage.

De fait, il est usuellement procédé à ce jour à une opération de calibrage sur l'appareil de lecture de contour à la mise en service de celui-ci, à l'aide d'une pièce étalon à la forme connue de laquelle on compare la forme relevée, et, de même, il est usuellement procédé à ce jour à des opérations successives de calibrage sur la machine à déborder, à l'aide également d'une pièce étalon, qui forme gabarit pour l'usinage d'un verre, et à la forme connue de laquelle on compare celle de ce verre après son usinage.

Pour la machine à déborder, une telle opération de calibrage implique à ce jour une mesure au pied à coulisse du verre usiné, elle doit par exemple intervenir systématiquement après chaque affûtage de l'outil de coupe, et, à chaque fois, l'opérateur doit ajuster en conséquence l'erreur de restitution dont il doit être tenu compte à chaque usinage.

Dans la demande de brevet allemand No 4 012 660, qui concerne, non pas la détermination de l'erreur de restitution d'une machine à déborder, mais le meulage, en deux temps, d'un verre sur une telle machine à déborder, en pratique une meuleuse, on assure, tout d'abord, un pré-ébauchage du verre, on relève, à l'aide de capteurs, et on mémorise, les données relatives à la géométrie du verre ainsi préébauché, on compare ces données à des données théoriques préenregistrées, on déduit, de cette comparaison, les valeurs de correction à apporter, et, à partir de ces valeurs de correction, on assure, en une ou deux étapes supplémentaires, la finition du verre.

En aucun cas il n'est question, dans cette demande de brevet allemand, de l'erreur de restitution de la meuleuse.

La demande de brevet européen No 0 492 740 concerne, elle, la remise en forme d'une aube usée de moteur.

Suivant le procédé qui fait l'objet de cette demande de brevet européen, on mesure le profil de l'aube, on mémorise les données résultant de cette mesure, on ajoute de la matière à l'aube, on usine l'aube en fonction des données précédemment mesurées, et on procède enfin à un contrôle de l'aube en assurant une nouvelle mesure de son profil et en comparant celui-ci à son profil d'origine.

Comme précédemment, il n'est pas question, dans cette demande de brevet européen, de la détermination de l'erreur de restitution d'une machine à déborder.

Dans le brevet américain No 4 912 880 est par ailleurs prévu le couplage, à une machine à déborder, d'un appareil de lecture de contour, mais la question de la détermination de l'erreur de restitution de cette machine à déborder n'y est pas non plus évoquée.

La présente invention a tout d'abord pour objet un procédé permettant d'assurer de manière relativement simple la détermination de cette erreur de restitution.

Ce procédé est d'une manière générale caractérisé en ce qu'il consiste à assurer un premier relevé sur l'appareil de lecture de contour à partir d'un gabarit de forme connue, à usiner une pièce sur la machine à déborder en fonction de ce premier relevé, à assurer un deuxième relevé sur l'appareil de lecture de contour à partir de la pièce précédemment usinée, et à déduire par le calcul de ces deux relevés l'erreur de restitution recherchée, par élimination entre eux de l'erreur de lecture de l'appareil de lecture de contour.

Si, en effet, on désigne, par exemple, par $D_0$ une dimension quelconque du gabarit utilisé, par $D_1$ le relevé de cette même dimension par l'appareil de lecture de contour, et par X l'erreur de lecture de celui-ci, on a, au terme du premier relevé :

$$D_1 = D_0 + X \qquad (I)$$

Si, corollairement, on désigne par $D_2$ la valeur de la dimension précédente après usinage d'un verre de lunettes par la machine à déborder, et par Y l'erreur de restitution de celle-ci, on a, au terme de l'usinage de ce verre de lunettes :

$$D_2 = D_1 + Y \qquad (II)$$

Si, enfin, on suppose, comme cela est en pratique le cas, que l'erreur de lecture X reste sensiblement constante, et si on désigne par $D_3$ la valeur de la dimension en question telle qu'elle est relevée par l'appareil de lecture de contour sur le verre de lunettes usiné, on a, au terme du deuxième relevé :

$$D_3 = D_2 + X \qquad (III)$$

Et, donc, en tenant compte de l'équation II :

$$D_3 = D_1 + X + Y \qquad (IV)$$

Les deux équations à deux inconnues I, IV permettent alors effectivement de déterminer l'erreur de lecture X et l'erreur de restitution Y en fonction du premier relevé $D_1$ et du deuxième relevé $D_3$.

La présente invention a encore pour objet l'application de ce qui précède à l'autocalibrage de l'ensemble que constituent une machine à déborder et un appareil de lecture de contour associés l'un à l'autre par une unité de pilotage numérique.

Cette application consiste à prévoir une prise en compte par l'unité de pilotage numérique de la différence entre deux relevés de l'appareil de lecture de contour portant, suivant le processus précédent, l'un sur un gabarit de forme connue, l'autre sur une pièce usinée sur la machine à déborder en fonction du relevé de ce gabarit.

En pratique les relevés effectués tiennent compte non seulement des dimensions du gabarit et de la pièce usinée, mais encore de leur orientation.

Le gabarit utilisé peut par exemple être un disque de contour circulaire, un disque comportant un méplat parallèlement à son axe, ou encore un disque de contour quadrangulaire, et par exemple carré.

Préférentiellement, il est procédé à des relevés pour chaque type de finition susceptible d'être adopté, c'est-à-dire tant pour une finition impliquant la formation d'un biseau ou d'une rainure que pour une finition se bornant à un lissage de la tranche du verre de lunettes.

Dans tous les cas, les résultats de ces relevés sont systématiquement acquis par l'unité de pilotage numérique, et, suivant un programme d'autocalibrage préétabli, celle-ci en tient ensuite compte dans son pilotage de la machine à déborder, en corrigeant en conséquence les instructions adressées à celle-ci en fonction des données reçues de l'appareil de lecture de contour.

L'appareil de lecture de contour est, par exemple, du type décrit dans le brevet FR 2 652 893 ou dans le brevet EP 291 378, tandis que la machine à déborder peut être celle décrite dans le brevet FR 2 553 323.

## Revendications

1. Procédé pour la détermination de l'erreur de restitution d'une machine à déborder à laquelle est associé un appareil de lecture de contour, caractérisé en ce qu'il consiste à assurer un premier relevé ($D_1 = D_0 + X$) sur l'appareil de lecture de contour à partir d'un gabarit de forme connue, à usiner une pièce sur la machine à déborder en fonction de ce premier relevé ($D_1 = D_0 + X$), à assurer un deuxième relevé ($D_3 = D_1 + X + Y$) sur l'appareil de lecture de contour à partir de la pièce précédemment usinée, et à déduire par le calcul de ces deux relevés l'erreur de restitution (Y) recherchée, par élimination entre eux de l'erreur de lecture (X) de l'appareil de lecture de contour.

2. Application d'un procédé suivant la revendication 1 à l'autocalibrage de l'ensemble que constituent une machine à déborder et un appareil de lecture de contour associés l'un à l'autre par une unité de pilotage numérique, caractérisée en ce qu'elle consiste à prévoir une prise en compte par l'unité de pilotage numérique de la différence entre deux relevés de l'appareil de lecture de contour portant, l'un, ($D_1 = D_0 + X$) sur un gabarit de forme connue, l'autre, ($D_3 = D_1 + X + Y$) sur une pièce usinée sur la machine à déborder en fonction du relevé dudit gabarit.

## Patentansprüche

1. Verfahren zu der Bestimmung des Erstellungs- bzw. Wiedergabefehlers einer Berandungsmaschine, welcher eine Umrißlesevorrichtung zugeordnet ist, dadurch gekennzeichnet, daß das Verfahren besteht aus bzw. umfaßt das Vorsehen einer ersten Vermessung ($D_1 = D_0 + X$) mit der Umrißlessvorrichtung ausgehend von einer Schablone einer bekannten Form, dem Bearbeiten eines Stückes auf der Berandungsmaschine gemäß dieser ersten Vermessung ($D_1 = D_0 + X$) und das Vorsehen einer zweiten Vermessung ($D_3 = D_1 + X + Y$) mit der Umrißlesevorrichtung ausgehend von dem zuvor bearbeitetem Stück und dem Bestimmen bzw. Folgern des gesuchten Erstellungs- bzw. Wiedergabefehlers (Y) durch die Berechnung mit bzw. aus den beiden Vermessungen durch die Eliminierung des Lesefehlers (X) der Umrißlesevorrichtung untereinander.

2. Anwendung eines Verfahrens gemäß Anspruch 1 zu der Autokalibrierung der Anordnung, beinhaltend bzw. umfassend eine Berandungsmaschine und eine Umrißlesevorrichtung, die miteinander durch eine bzw. mittels einer numerischen Steuereinheit zugeordnet sind, dadurch gekennzeichent, daß die Anwendung die Berücksichtigung durch die numerische Steuereinheit des Unterschiedes zwischen den beiden Vermessungen der Umrißlesevorrichtung umfaßt bzw. aus dieser besteht, und zwar die eine ($D_1 = D_0 + X$) bezogen auf eine Schablone einer bekannten Form und die andere ($D_3 = D_1 + X + Y$) bezogen auf ein auf einer Berandungsmaschine bearbeitetes Stück und zwar gemäß der Vermessung der genannten Schablone.

## Claims

1. A process for determining the restitution error of a trimming machine with which a contour reading apparatus is associated, characterised in that it comprises effecting a first plotting ($D_1 = D_0 + X$) on the contour reading apparatus on the basis of a template of known shape, machining a part on the trimming machine in dependence on said first plotting ($D_1 = D_0 + X$), effecting a second plotting ($D_3 = D_1 + X + Y$) on the contour reading apparatus on the basis of the previously machined part, and deducing by calculation of said two plottings the restitution error (Y) being sought, by elimination as between them of the reading error (X) of the contour reading apparatus.

2. Use of a process according to claim 1 for auto-calibration of the assembly formed by a trimming machine and a contour reading apparatus which are associated with each other by a numerical control unit, characterised in that it comprises providing for taking account by means of the numerical control unit of the difference between two plottings of the contour reading apparatus, one ($D_1 = D_0 + X$) relating to a template of known shape and the other ($D_3 = D_1 + X + Y$) relating to a part machined on the trimming machine in dependence on the plotting of said template.